# EUROPÄISCHE PATENTSCHRIFT

(11) **EP 1 846 807 B1**
(45) Veröffentlichungstag und Bekanntmachung des Hinweises auf die Patenterteilung: **07.07.2010**
(21) Anmeldenummer: 06706391.7
(22) Anmeldetag: 25.01.2006
(51) Int. Cl.: G05D 16/20, F15B 13/044

(54) **VENTIL, INSBESONDERE PROPORTIONAL-DRUCKBEGRENZUNGSVENTIL**
VALVE, ESPECIALLY PROPORTIONAL PRESSURE RELIEF VALVE
VANNE, EN PARTICULIER VANNE PROPORTIONNELLE LIMITATRICE DE PRESSION

(30) Priorität: 11.02.2005 DE 102005006321
(43) Veröffentlichungstag der Anmeldung: 24.10.2007
(73) Patentinhaber: Hydac Fluidtechnik GmbH, 66280 Sulzbach/Saar (DE)
(72) Erfinder: BRUCK, Peter, 66484 Althornbach (DE); ALBERT, Hermann, 66822 Lebach (DE)
(74) Vertreter: Bartels, Martin Erich Arthur
(86) Internationale Anmeldenummer: PCT/EP2006/000620
(87) Internationale Veröffentlichungsnummer: WO 2006/084576

(56) Entgegenhaltungen:
- EP-A- 0 369 412
- DE-A1- 4 324 589
- DE-A1- 4 402 580
- DE-A1- 4 423 629
- US-A- 4 316 599

## Beschreibung

Die Erfindung betrifft ein Ventil, insbesondere Proportional-Druckbegrenzungsventil, mit einem Ventilgehäuse mit mindestens drei Fluidanschlüssen, wobei das Ventil an ein hydraulisches Antriebssystem mit einem vorgebbaren Verbraucherdruck anschließbar ist.

Bekannt sind Proportional-Druckregelventile (US-A-4 316 599), die unter anderem Steuerventile für ölhydraulische Anlagen bilden, die bei veränderlichem Eingangsdruck im wesentlichen einen konstanten Ausgangsdruck liefern. Der zu steuernde Ausgangsdruck wird durch das Stromsignal vorgegeben, das von einer entsprechenden Ansteuerelektronik geliefert wird und auf einen Betätigungsmagneten als Magnetsystem wirkt. Der Betätigungsmagnet kann als druckdichter Öl-Badmagnet ausgeführt sein und weist eine lange Lebensdauer auf.

Dahingehende Proportional-Druckregelventile können direkt gesteuerte Kolbenschieberventile in Drei/Wege-Ausführung sein, d.h. mit ausgangsseitiger Druckabsicherung. Sie werden unter anderem in ölhydraulischen Anlagen zur Steuerung von Kupplungen in Schaltgetrieben zur gezielten Beeinflussung von Druckaufbau und Druckabbau, zur Druckferneinstellung, aber auch zur Steuerung von Druckverläufen und zur Vorsteuerung von Hydroventilen und Logikelementen eingesetzt.

Dahingehende herkömmliche Proportional-Druckregelventile weisen insbesondere bei dünnflüssigen Fluidmedien eine schlechte Stabilität auf, d.h. sie beginnen zu "schwingen", was insbesondere dann schädlich ist, wenn die bekannten Ventile Sonderfunktionen erfüllen sollen, beispielsweise in Kraftfahrzeug-Servolenkungen, hydraulischen Fahrantrieben sowie sonstigen sicherheitstechnisch relevanten Bereichen. Es hat sich allgemein gezeigt, dass bei der Anwendung von Druckregelventilen die Anfälligkeit für Störgrößen im Eigenfrequenzbereich des Ventils liegt, wobei die auftretenden Instabilitäten bis zum Funktionsausfall des Ventils und der zugehörigen Anlagenteile einer Hydroanlage führen können.

Im Stand der Technik sind ferner mehrachsige hydraulische Fahrantriebe für Hubarbeitsbühnen bekannt, die regelmäßig einen Heckantrieb aufweisen sowie einen zuschaltbaren Allradantrieb. Um einen funktionssicheren Betrieb zu gewährleisten mit Antrieb nur einer Achse und Freilauf der anderen Achse sowie Durchführen von Bremsvorgängen mit schlagartigem Abstoppen, ist bei der bekannten Lösung eine Vielzahl von Ventilkomponenten notwendig, wie zwei sog. Schockventile, zwei Vorspannventilkombinationen, bestehend aus je einem Druckbegrenzungsventil und einem 2/2-Wegeventil, und ein 2/2-Wegeventil als Umlaufventil. Der dahingehende Funktionsaufbau ist zwar sicher im Betrieb, aber bereits aufgrund der Vielzahl an Ventilen ist mit deren Ausfall im Betrieb zu rechnen, was die Wartungsintervalle verkürzt. Auch benötigt die bekannte Lösung viel Bauraum und ist aufgrund der Teilevielzahl teuer in der Herstellung.

Ausgehend von diesem Stand der Technik liegt der Erfindung die Aufgabe zugrunde, ein Ventil, insbesondere ein Proportional-Druckbegrenzungsventil zu schaffen, das auch bei Einsatz von dünnflüssigen Fluidmedien eine gute Stabilität aufweist und das insbesondere bei einem Einsatz in sicherheitsrelevanten Bereichen einschließlich hydraulischen Fahrantrieben die Komponentenvielzahl reduzieren hilft. Eine dahingehende Aufgabe löst ein Ventil mit den Merkmalen des Patentanspruches 1 in seiner Gesamtheit.

Dadurch, dass gemäß dem kennzeichnenden Teil des Patentanspruches 1 der anstehende Verbraucherdruck an einem Fluidanschluß zumindest derart auf den Ventilkolben einwirkt, dass abhängig vom anstehenden Verbraucherdruck und von der Betätigungskraft der Steuereinrichtung eine Fluiddurchströmung zwischen den beiden anderen Fluidanschlüssen in beiden Richtungen innerhalb des Ventilgehäuses möglich ist, ist ein Ventil geschaffen, das auch bei dünnflüssigen Fluidmedien sichere Ventilschaltfunktionen ausüben kann und die Anfälligkeit gegenüber Störgrößen reduziert ist. Sofern das Ventil innerhalb gesamthydraulischer Anlagen, wie hydraulischen Fahrantrieben, Anwendung findet, können die bisher zum Einsatz kommenden Schockventile, Vorspannventile und Wegeventile durch ein Grundventil ersetzt werden, wobei im wesentlichen die gleichen Schalt- und Betriebsfunktionen dann mit nur einem Ventil gemäß der Erfindung realisierbar sind. Dies reduziert die Herstell- und die Wartungskosten und da innerhalb des Fahrantriebes nur ein Ventil zu beherrschen ist, ist insgesamt die Betriebsfunktionssicherheit erhöht.

Weitere vorteilhafte Ausführungsformen des erfindungsgemäßen Ventils sind Gegenstand der sonstigen Unteransprüche.

Im folgenden wird das erfindungsgemäße Ventil, insbesondere Proportional-Druckbegrenzungsventil, anhand verschiedener Ausführungsbeispiele, nach der Zeichnung näher erläutert. Dabei zeigen in prinzipieller und nicht maßstäblicher Darstellung die
- Fig. 1: in der Art eines hydraulischen Schaltplanes, Teile einer hy- draulischen Hubarbeitsbühne nach dem Stand der Technik;
- Fig.2: eine der Fig.1 entsprechende Schaltdarstellung, jedoch bezo- gen auf die erfindungsgemäße Lösung;
- Fig.3 bis 5: im Längsschnitt verschiedene Ausführungsformen des erfin- dungsgemäßen Ventils, wobei in der Fig.3 der näheren Erläu- terung wegen noch das Wechselventil nach der Fig.2 mit ein- gezeichnet ist.

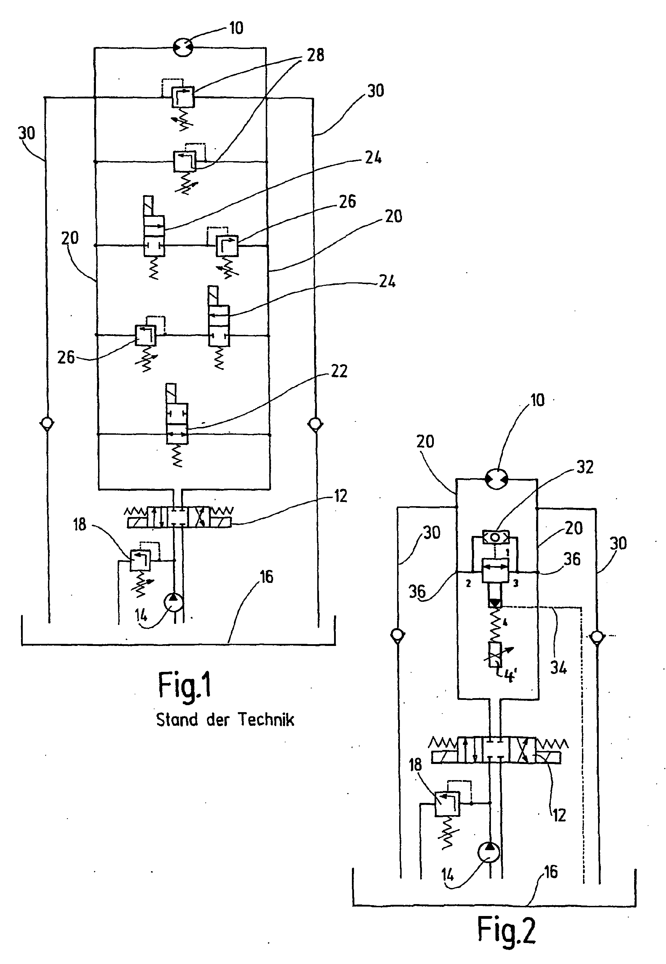

Die Fig.1 zeigt in der Art eines Schaltplanes Teile eines hydraulischen Fahrantriebes für eine nicht näher dargestellte Scherenhubarbeitsbühne. Dahingehende Fahrzeuge weisen regelmäßig zwei Achsen auf, wobei regelmäßig ein Heckantrieb realisiert ist und die Vorderachse ist zur Realisierung eines zuschaltbaren Allradantriebes getrennt ansteuerbar, wobei die Antriebe für beide Achsen im wesentlichen gleich konzipiert sind. In der Fig.1 zum Stand der Technik ist als Antriebseinrichtung für eine nicht näher dargestellte Fahrzeugachse eines dahingehenden Fahrzeuges ein Hydromotor 10 dargestellt, der in Abhängigkeit der Schaltstellung eines 4/3-WegeVentils 12 in beiden Drehrichtungen antreibbar ist für einen Vorwärts-oder Rückwärtsbetrieb sowie zur Realisierung einer Bremsfunktion. Das 4/3-Wege-Ventil 12 ist gemäß der Darstellung nach der Fig.1 in der Neutralstellung gezeigt und im übrigen eingangsseitig an eine Hydropumpe 14 angeschlossen sowie an einen Tank 16.

Die Versorgungsleitung der Hydropumpe 14 ist über ein übliches Druckbegrenzungsventil 18 abgesichert. Zu den jeweiligen Eingangsseiten des Hydromotors 10 verlaufen zwei parallel verlaufende Versorgungsleitungen 20 und zwischen die beiden Versorgungsleitungen 20 sind im Parallelschluß verschiedene Ventile angeordnet, wie ein Freischalt- oder Umlaufventil 22, zwei Vorspannventile 24, denen jeweils ein Druckbegrenzungsventil 26 zugeordnet ist, sowie zwei weitere Druckbegrenzungsventile 28 als sog. Schockventile. Im Bereich der Anschlußstellen des in Blickrichtung auf die Fig.1 gesehen zuoberst angeordneten Schockventils 28 in die beiden Versorgungsleitungen 20 sind gegenüberliegend zwei Nebenleitungen 30 angeschlossen, die über Rückschlagventile abgesichert zum Tank 16 zurückführen. Die dahingehenden Rückschlagventile dienen als Nachsaugventile zur Vermeidung von Kavitation. Insgesamt weist die bekannte Lösung also zwei Schockventile 28, zwei Vorspannventile 24 mit Druckbegrenzungsventilen 26 sowie ein Umlaufventil 22 auf, wobei die beiden Vorspannventile 24 und das Umlaufventil 22 in Form von 2/2-Wege-Ventilen ausgebildet sind.

Um die Funktion des bekannten Fahrantriebes nach der Fig.1 näher zu erläutern, wird im folgenden ein typischer Betriebsablauf wiedergegeben. Soll beispielsweise bei Antrieb nur einer Achse (Heckantrieb) die zweite Achse im Freilauf mitgeführt werden, wird das Umlaufventil 22 in seine in der Fig.1 gezeigte Durchschaltstellung geschaltet, so dass das vom Hydro- oder Fahrmotor 10 zurückkommende Öl wieder zum Motor geleitet wird, um einen Trockenlauf zu vermeiden. Beim Fahrbetrieb mit nur einer angetriebenen Achse bleibt das 4/3-Wegeventil 12 abgeschaltet, damit das gesamte Pumpenöl auf die aktive Achse geleitet und damit die Geschwindigkeit verdoppelt wird.

Soll ein Bremsvorgang durchgeführt werden, kann die dahingehende inaktive Achse unterstützend zum Bremsvorgang zugeschaltet werden. Dazu wird das Umlaufventil 22 gesperrt und in Abhängigkeit der Bremsrichtung wird das weitere 2/2-Wege-Ventil 24 als Vorspannventil geschaltet, das dergestalt einen fluidführenden Weg freigibt über das ihm zugeordnete zusätzliche Druckbegrenzungsventil 26. Da für eine dahingehende Bremsmöglichkeit in beide gegenläufige Fahrrichtungen die Anordnung, wie in der Fig.1 dargestellt, doppelt vorhanden sein muß, ergibt sich für eine Vorspann- oder Bremsfunktion mithin die doppelte Anzahl der Druckbegrenzungsventile 26 nebst den 2/2-Wege-Ventilen 24.

Soll ein schlagartiges Abstoppen (Notbremsung) des Fahrantriebes durch Ausschalten aller Wege-Ventile erfolgen, oder kommt es sonst zu ungewollt hohen äußeren Belastungen auf den Öl- oder Fluidkreislauf, könnte sich grundsätzlich der Druck in den Leitungen, beispielsweise den Versorgungsleitungen 20, oder dem Ventilgehäuse derart erhöhen, dass es zum Versagen eines Bauteils kommen kann. Um dem zu begegnen, sind in den genannten Kreislauf weitere Druckbegrenzungsventile 28 als sog. Schockventile eingebaut, die bei Erreichen eines vorgebbaren Druckes den Umlauf des Fluids oder Öls in einem eigenen Kreislauf ermöglichen. Die beschriebenen Funktionen müssen für einen funktionssicheren Betrieb nie gleichzeitig geschaltet werden und für einen zuschaltbaren Allradantrieb sind die genannten Ventileinrichtungen gemäß der Schaltdarstellung nach der Fig.1 für eine jede jeweils anzusteuernde Achse vorhanden.

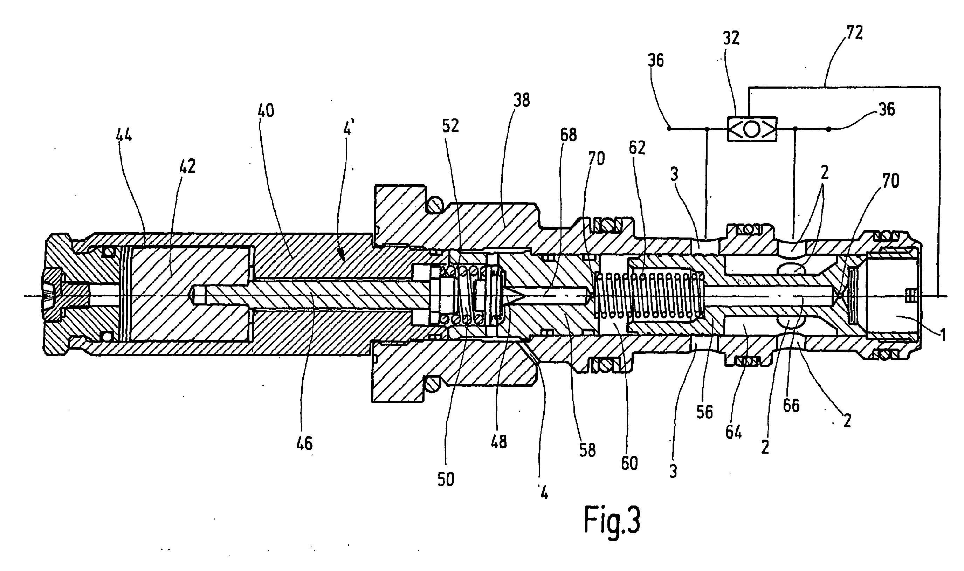

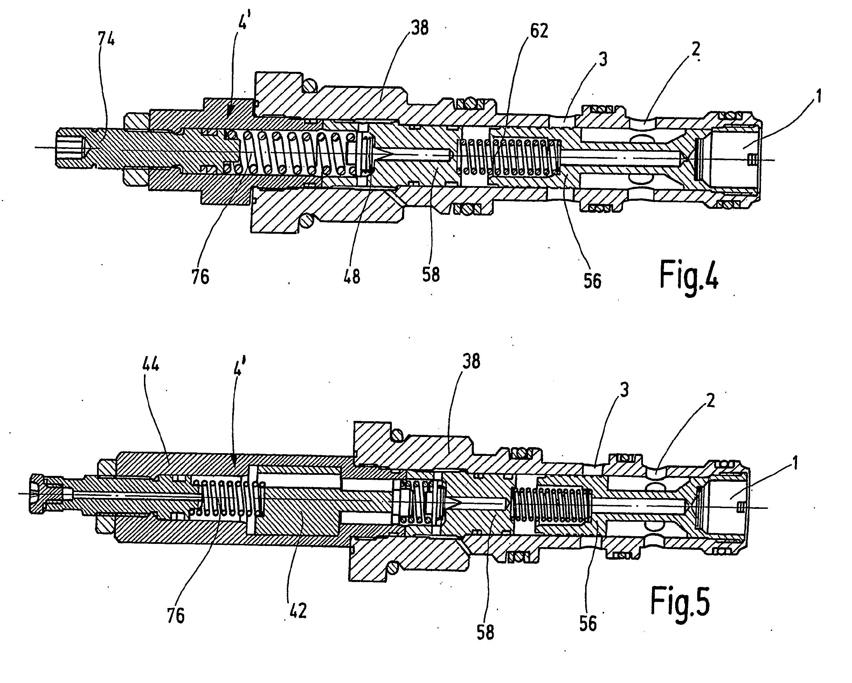

Bei der geänderten Ausführungsform nach der Fig.2 mit dem erfindungsgemäßen Ventil sind dieselben Baukomponenten, wie in der Fig.1, auch mit denselben Bezugszeichen wiedergegeben. Die Vielzahl an aufgezeigten Einzelventilen nach der Lösung nach der Fig.1 ist bei dem Schaltplan nach der Fig.2 durch ein Ventil nach der Erfindung ersetzt, das mit einem Wechselventil 32 als weiteres Ventil zusammenwirkt, wobei die drei Fluidanschlüsse 1, 2 und 3 angegeben sind und die Steuereinrichtung des Ventils ist mit 4' bezeichnet. Des weiteren weist das Ventil einen weiteren vierten Fluidanschluß auf, der über die Verbindungsleitung 34 an den Tank 16 angeschlossen ist und zur drucklosen Ableitung des Vorsteueröls dient. Die genannte Ventilanordnung mit Wechselventil 32 ist über Anschlußstellen 36 zwischen die beiden Versorgungleitungen 20 geschaltet. Das in den Schaltplan der Fig.2 eingesetzte Proportionalventil ist in verschiedenen Ausführungsformen nach den Fig.3 bis 5 im einzelnen wiedergegeben, wobei bei der Ausführungsform nach der Fig.3 noch das Wechselventil 32 symbolhaft wiedergegeben ist. Letzteres ist der einfacheren Darstellung wegen bei den gezeigten Ventillängsschnitten nach den Fig.4 und 5 nicht mehr wiedergegeben.

Bevor auf die Funktion der hydraulischen Schaltung nach der Fig.2 eingegangen wird, soll im folgenden zunächst das Proportionalventil nach den Fig.3 bis 5 näher erläutert werden.

Das Ventil, insbesondere Proportional-Druckbegrenzungsventil, nach der Fig.3 weist ein Ventilgehäuse 38 in der Art einer Einschraubpatrone auf. Am freien stirnseitigen Ende des Ventilgehäuses 38 ist der eine Fluidanschluß 1 angeordnet und entlang des Außenumfanges des Ventilgehäuses 38 durchgreifen in radialer Richtung die weiteren Fluidanschlüsse 2, 3 und 4 das dahingehende Ventilgehäuse 38. Die einzelnen Fluidanschlüsse 1, 2, 3 und 4 sind entsprechend über außenumfangsseitig am Ventilgehäuse 38 angeordnete Dichtungen voneinander fluiddicht getrennt. Des weiteren ist, wie in der Fig.3 symbolhaft dargestellt, das Wechselventil 32 mit seinen Eingangsseiten an die Fluidanschlüsse 1, 2 und 3 angeschlossen sowie an die Anschlußstellen 36, die gemäß der Darstellung nach der Fig.2 in die Versorgungsleitungen 20 münden (in Fig.3 nicht dargestellt).

Das Ventilgehäuse 38 ist, wie dargestellt, in der Art einer Einschraubpatrone ausgebildet und kann dergestalt in einen nicht näher dargestellten Anschlußblock des Fahrantriebes mit seiner gesamthydraulischen Anlage eingeschraubt werden. An seinem, dem Fluidanschluß 1 gegenüberliegenden Ende ist das Ventilgehäuse 38 mit einer Steuereinrichtung 40 versehen, die in der Art eines Magnetsystems ausgebildet einen Magnetanker 42 aufweist, der mittels einer Spule bestrombar (nicht näher dargestellt) sich innerhalb eines Polrohres 44 hin und her bewegen kann und dabei zur Ansteuerung eines Schließteils 48 in der Form eines Schließkegels auf eine Betätigungsstange 46 einwirkt. Schließteil 48 und Betätigungsstange 46 sind über eine Druckfeder 50 als Energiespeicher voneinander getrennt. Sowohl das Schließteil 48 als auch die Druckfeder 50 sowie das vordere, dem Magnetanker 42 abgekehrte Ende der Betätigungsstange 46 sind in einem Fluidraum 52 geführt, der über den Fluidanschluß 4 fluidführend verbindbar ist mit der Verbindungsleitung 34 nach der Fig.2, die mit ihrem freien Ende in den Tank 16 mündet.

Innerhalb des Ventilgehäuses 38 ist ein Ventilkolben 56 geführt, wobei der Ventilkolben 56 eine Art Hauptstufe ausbildet und das Bauteil 58 stellt den Vorsteuersitz des Ventiles dar in der Art einer Vorstufe. Der Ventilkolben 56 begrenzt mit seinem einen stirnseitigen Ende einen weiteren Fluidraum 60, in dem als weiterer Energiespeicher eine Druckfeder 62 geführt ist, die in eine hohlzylindrische Ausnehmung im Ventilkolben 56 eingreift. Der Ventilkolben 56 ist ferner außenumfangsseitig mit einer Radialausnehmung 64 versehen, deren axiale Länge in Längsrichtung des Ventils gesehen derart bemessen ist, dass in vorgebbaren Schalt- oder Verschiebestel lungen des Ventilkolbens 56 jedenfalls partiell ein fluidführender Weg zwischen den Fluidanschlüssen 2 und 3 freigegeben und wieder, wie in der Fig.3 dargestellt, sperrbar ist. Sowohl der Ventilkolben 56 als auch der Vorsteuersitz 58 weisen in Längsrichtung durchgehende Fluidkanäle 66,68 auf, die in Blickrichtung auf die Fig.3 gesehen an ihrem rechten Ende jeweils eine Blende 70 aufweisen, die den Fluidstrom drosseln, der an dem Fluidanschluß 1 ansteht.

Das in der Fig.3 dargestellte Proportionalventil kann in beide Richtungen, also vom Fluidanschluß 2 zum Fluidanschluß 3 oder umgekehrt von Fluidanschluß 3 zu Fluidanschluß 2, durchströmt werden. Die Richtung der Durchströmung wird unter anderem dadurch bestimmt, wo jeweils der höchste Verbraucherdruck in den Versorgungsleitungen 20 ansteht. Der dahingehende Verbraucherdruck wird durch das Wechselventil 32 über eine Meldeleitung 72 zum Fluidanschluß 1 des Proportionalventils gemeldet. Wird der durch das Magnetsystem der Steuereinrichtung 4' einstellbare Schließdruck überschritten, indem der am Fluidanschluß 1 anstehende Verbraucherdruck das Schließteil 48 vom Vorsteuersitz 58 als Vorstufe abhebt, öffnet dergestalt die Vorsteuerung und der als Hauptstufe konzipierte Ventilkolben 56 bewegt sich gegen die Kraft des Energiespeichers in Form der Druckfeder 62 nach links. Dadurch wird die fluidführende Verbindung von Fluidanschluß 2 nach Fluidanschluß 3 geöffnet und Fluid (Öl) kann vom höheren zum niedrigeren Druckniveau fließen. Im unbestromten Zustand, also bei nicht aktiviertem Magnetsystem, erfüllt das Proportionalventil die Forderung nach einem drucklosen Ölumlauf einer Achse (Achse im Freilauf), wofür bisher ein zusätzliches 2/2-Wege-Ventil 22 (vgl. Fig.1) nach dem Stand der Technik notwendig war.

Bei einer teilbestomten Einstellung des Magnetsystems und mithin teilweiser Aktivierung des Magnetankers 42 ist mit der erfindungsgemäßen Ventillösung die Funktion der beschriebenen Vorspannung realisiert, bei der der Hydromotor 10 über einen definierten Druck abzubremsen ist, wobei mit der erfindungsgemäßen Lösung über die Magnetkraft des Magnetsystems die Bremswirkung proportional eingestellt werden kann. Die dahingehende Ventilfunktion ersetzt dann insoweit die bisherige Kombination von Druckbegrenzungsventil 26 mit 2/2-Wege-Ventil 24 als Gesamtvorspannungssystem (vgl. Fig.1). Bei voller Bestromung und mithin höchster Magnetschließkraft erfüllt das erfindungsgemäße Proportionalventil die Funktion der bisher bekannten Schockventile 28 als eigenständige Druckbegrenzungsventile. Ein weiterer Vorteil der erfindungsgemäßen Lösung ist, dass die Referenz des Proportionalventils gegen den Druck im Tank 16 gelegt werden kann, so dass sich die Drücke auf der Abflußseite nicht mehr auf den eingestellten Druck addieren können.

Die geänderten Ausführungsformen nach den Fig.4 und 5 werden nur noch insofern erläutert, als sie sich wesentlich von der Ventilkonstruktion nach der Fig.3 unterscheiden. Von ihrem eigentlichen Ventilaufbau her entsprechen sich die drei Lösungen nach den Fig.3 bis 5 und die wesentlichen Unterschiede sind nur im Umfang der Ausbildung der jeweiligen Steuereinrichtung 4' zu sehen.

Bei der Ausführungsform nach der Fig.4 wurde das Magnetsystem als Steuereinrichtung 4' durch eine mechanische Voreinstellung ersetzt, mit der über eine Spindel 74 und eine Kraftfeder 76 der Schließdruck für das Schließteil 48 von Hand vorgebbar ist. Das Ventil ist als doppelt wirkendes vorgesteuertes Schockventil mit Tankreferenz über die Verbindungsleitung 34 ausgestaltet, wobei die Doppelwirkung auf der Entkoppelung des Steueranschlusses 1 von den Verbraucheranschlüssen 3 und 4 beruht. Die dahingehende Ventilvariante ist sowohl definiert (schwarz/weiß - Schaltverhalten) als auch proportional ansteuerbar.

Während die Ausführungsform nach der Fig.3 ein sog. drückendes Magnetsystem aufweist, bei dem im bestromten Zustand der Magnetanker 42 über die Betätigungsstange 46 das Schließteil 48 in seiner den Kanal 68 sperrenden Schließstellung zu halten sucht, ist bei der Lösung nach der Fig.5 das Magnetsystem mit Magnetanker 42 als sog. ziehendes System ausgebildet, bei dem der Magnetanker 42 unter dem Einfluß einer bestromten Wicklungsspule (nicht dargestellt) in Blickrichtung auf die Fig. 5 gesehen von rechts nach links verfährt entgegen der Wirkung der Kraftfeder 76 als Teil einer mechanischen Voreinstellung gemäß der Lösung nach der Fig.4. Das Ausführungsbeispiel nach der Fig. 5 kombiniert also ein ziehend wirkendes Magnetsystem mit einer mechanischen Voreinstellung gemäß der Lösung nach der Fig.4. Ist das zuordenbare Polrohr 44 als sog. Fail-Safe-Polrohr ausgebildet, ergibt dies die Möglichkeit von weiteren Varianten. So würde bei voller Bestromung ein druckloser Umlauf ermöglicht und im unbestromten Zustand des Magnetsystems als Schalteinrichtung 4' hätte man eine Art Fail-Safe-Ventil mit der Funktion eines doppelt wirkenden vorgesteuerten Schockventils mit Tankreferenz. Der Maximaldruck kann dann, ähnlich wie bei einem normalen Druckbegrenzungsventil, manuell eingestellt werden. Der dahingehend stromlose Zustand ist dergestalt in der Fig. 5 wiedergegeben.

Wird der erfindungsgemäße Proportionalantrieb bei dem beschriebenen hydraulischen Fahrzeugantrieb eingesetzt, ist eine deutliche Reduzierung der Anzahl der benötigten Ventile möglich und insgesamt verkleinert sich der Bauraum für die Ventillösung. Da das erfindungsgemäße Proportionalventil in beiden Richtungen durchströmbar ist, fällt insoweit auch die doppelte Anzahl der Ventile gemäß der bekannten Lösung nach der Fig.1 weg. Ausgehend von der Überlegung, dass keine zwei Funktionen gleichzeitig ablaufen müssen, kann man dergestalt auf die alternative Schaltung des Proportionalventils gemäß einer hydraulischen Schaltlösung nach der Fig.2 zurückgreifen und damit die Vielzahl an Ventilen einsparen, was insgesamt die Herstell- und Wartungskosten reduzieren hilft. Das erfindungsgemäße Proportionalventil braucht aber nicht auf die Verwendung von Fahrzeugantrieben eingeschränkt zu sein, sondern kann insbesondere aufgrund seines stabilen Schaltverhaltens auch in sonstigen hydraulischen Kreisläufen Anwendung finden, insbesondere wo auf erhöhte Sicherheitsanforderungen Wert gelegt wird.

## Patentansprüche

1. Ventil, insbesondere Proportional-Druckbegrenzungsventil, mit einem Ventilgehäuse (38) mit mindestens drei Fluidanschlüssen (1,2,3), wobei das Ventil an ein hydraulisches Antriebssystem mit einem vorgebbaren Verbraucherdruck anschließbar ist, wobei mittels einer Steuereinrichtung (40) ein Ventilkolben (56) ansteuerbar ist, der mittels eines Energiespeichers (62) in Wirkverbindung mit einem Vorsteuersitz (58) steht, **dadurch gekennzeichnet, dass** der anstehende Verbraucherdruck an einem Fluidanschluß (1) zumindest derart auf den Ventilkolben (56) einwirkt, dass abhängig vom anstehenden Verbraucherdruck und von der Betätigungskraft der Steuereinrichtung (40) eine Fluiddurchströmung zwischen den beiden anderen Fluidanschlüssen (2 und 3) in beiden Richtungen innerhalb des Ventilgehäuses (38) möglich ist.

2. Ventil nach Anspruch 1, **dadurch gekennzeichnet, dass** zwischen die beiden anderen Fluidanschlüsse (2,3) ein Wechselventil (32) geschaltet ist, das über eine Meldeleitung (72) den höchsten Verbraucherdruck an den einen Fluidanschluß (1) wiedergibt.

3. Ventil nach Anspruch 1 oder 2, **dadurch gekennzeichnet, dass** der eine Fluidanschluß (1) stirnseitig in das freie Ende des Ventilgehäuses (38) mündet und dass die beiden anderen Fluidanschlüsse (2,3) entlang seines Außenumfanges das Ventilgehäuse (38) durchgreifen und mittels des einen Ventilkolbens (56) als Hauptstufe abhängig von seiner Stellung miteinander fluidführend verbindbar sind.

4. Ventil nach Anspruch 3, **dadurch gekennzeichnet, dass** der Vorsteuersitz (58) in der Art einer Vorstufe wirkt und von der Steuereinrichtung (4') mit einer vorgebbaren Betätigungskraft beaufschlagbar ist.

5. Ventil nach einem der Ansprüche 1 bis 4, **dadurch gekennzeichnet, dass** der Energiespeicher zwischen dem Ventilkolben (56) und dem Vorsteuersitz (58) als Druckfeder (62) ausgebildet ist.

6. Ventil nach einem der Ansprüche 1 bis 5, **dadurch gekennzeichnet, dass** der Ventilkolben (56) und der Vorsteuersitz (58) jeweils von einem Verbindungskanal (66,68) durchgriffen sind, der an seiner dem Verbraucherdruck zugewandten Seite mit einer Blende (70) oder Drossel versehen ist.

7. Ventil nach Anspruch 6, **dadurch gekennzeichnet, dass** der Verbindungskanal (68) des Vorsteuersitzes (58) von einem Schließteil (48) der Steuereinrichtung (4') verschließbar ist.

8. Ventil nach einem der Ansprüche 1 bis 7, **dadurch gekennzeichnet, dass** der Ventilkolben (56) und der Vorsteuersitz (58) mittels des Energiespeichers unter Bildung eines Fluidraums (60) auf Abstand zueinander gehalten sind.

9. Ventil nach einem der Ansprüche 1 bis 8, **dadurch gekennzeichnet, dass** die Steuereinrichtung (4') ein Magnetsystem mit ansteuerbarem Magnetanker (42) aufweist, der auf den Ventilkolben (56) und den Vorsteuersitz (58) einwirkt, oder aus einer mechanischen Voreinstellung (74) besteht oder aus eine Kombination von Magnetsystem mit mechanischer Voreinstellung.

10. Ventil nach einem der Ansprüche 1 bis 9, **dadurch gekennzeichnet, dass** es einen weiteren vierten Fluidanschluß (4) aufweist, der zur drucklosen Ableitung des Vorsteueröls dient.

## Claims

1. A valve, in particular a proportional pressure control valve, having a valve housing (38) comprising at least three fluid connections (1, 2, 3), the valve being connectable to a hydraulic drive system with a prespecifiable consumer pressure, a valve piston (56) being controllable by means of a control device (40) which is actively connected to a pilot seat (58) by means of an energy accumulator (62), **characterised in that** the consumer pressure given on a fluid connection (1) acts at least on the valve piston (56) such that dependently upon the given consumer pressure and the actuating force of the control device (40) a fluid flow between the two other fluid connections (2 and 3) in both directions within the valve housing (38) is possible.

2. The valve according to Claim 1, **characterised in that** connected between the two other fluid connections (2, 3) is a shuttle valve (32) which reproduces via a signalling line (72) the highest consumer pressure at the one fluid connection (1).

3. The valve according to Claim 1 or 2, **characterised in that** the one fluid connection (1) opens out on the front side into the free end of the valve housing (38) and that the two other fluid connections (2, 3) pass through the valve housing (38) along its outer periphery and can be connected to one another such as to convey fluid by means of the one valve piston (56) as a main stage, independently of its position.

4. The valve according to Claim 3, **characterised in that** the pilot seat (58) acts in the manner of a pre-stage and can subjected to a prespecifiable actuation force by the control device (4').

5. The valve according to any of Claims 1 to 4, **characterised in that** the energy accumulator between the valve piston (56) and the pilot seat (58) is in the form of a pressure spring (62).

6. The valve according to any of Claims 1 to 5, **characterised in that** the valve piston (56) and the pilot seat (58) are respectively passed through by a connection channel (66, 68) which is provided on its side facing towards the consumer pressure with an aperture (70) or throttle.

7. The valve according to Claim 6, **characterised in that** the connection channel (68) of the pilot seat (58) can be closed by a closing part (48) of the control device (4').

8. The valve according to any of Claims 1 to 7, **characterised in that** the valve piston (56) and the pilot seat (58) are kept a distance apart from one another by means of the energy accumulator such as to form a fluid space (60).

9. The valve according to any of Claims 1 to 8, **characterised in that** the control device (4') has a magnetic system with a controllable armature (42) which acts upon the valve piston (56) and the pilot seat (58) or consists of a mechanical pre-setting (74) or of a combination of a magnetic system with a mechanical pre-setting.

10. The valve according to any of Claims 1 to 9, **characterised in that** it has a further fourth fluid connection (4) which serves to discharge the pilot oil without any pressure.

## Revendications

1. Vanne, notamment vanne proportionnelle, de limitation de la pression, comprenant un corps (38) de vanne ayant au moins trois raccords (1, 2, 3) fluidiques, la vanne pouvant être raccordée à un système d'entraînement hydraulique ayant une pression de consommateur pouvant être prescrite, dans laquelle, au moyen d'un dispositif (40) de commande, un piston (56) de vanne peut être commandé, piston qui, au moyen d'un accumulateur (62) d'énergie est en coopération avec un siège (58) pilote, **caractérisée en ce que** la pression de consommateur existante sur un raccord (1) fluidique agit au moins sur le piston (56) de vanne de manière à rendre possible, en fonction de la pression de consommateur existante et de la force d'actionnement du dispositif (40) de commande, un passage de fluide entre les deux autres raccords (2 et 3) fluidiques dans les deux sens à l'intérieur du corps (38) de vanne.

2. Vanne suivant la revendication 1, **caractérisée en ce qu'**entre les deux autres raccords (2, 3) fluidiques est monté un sélecteur (32) de circuit qui, par une ligne (72) de signalisation, redonne la plus haute pression de consommateur à l'un des raccords (1) fluidiques.

3. Vanne suivant la revendication 1 ou 2, **caractérisée en ce que** l'un des raccords (1) fluidiques débouche du côté frontal dans l'extrémité libre du corps (36) de vanne et **en ce que** les deux autres raccords (2, 3) fluidiques traversent le long de son pourtour extérieur le corps (38) de vanne et peuvent communiquer fluidiquement entre eux au moyen du piston (56) de vanne servant d'échelon principal en fonction de sa position.

4. Vanne suivant la revendication 3, **caractérisée en ce que** le siège (58) pilote agit à la manière d'un échelon préalable et peut être soumis par le dispositif (4') de commande à une force d'actionnement pouvant être prescrite.

5. Vanne suivant l'une des revendications 1 à 4, **caractérisée en ce que** l'accumulateur d'énergie est constitué sous la forme d'un ressort (62) de compression entre le piston (56) de vanne et le siège (58) pilote.

6. Vanne suivant l'une des revendications 1 à 5, **caractérisée en ce que** le piston (56) de vanne et le siège (58) pilote sont traversés respectivement par un canal (66, 68) de communication, qui est pourvu d'un obturateur (70) ou d'un étranglement à son extrémité tournée vers la pression de consommateur.

7. Vanne suivant la revendication 6, **caractérisée en ce que** le canal (68) de communication du siège(58) pilote peut être fermé par une partie (48) de fermeture du dispositif (4') de commande.

8. Vanne suivant l'une des revendications 1 à 7, **caractérisée en ce que** le piston (56) de vanne et le siège (58) pilote sont maintenus à distance l'un de l'autre au moyen de l'accumulateur d'énergie en formant un espace (60) pour du fluide.

9. Vanne suivant l'une des revendications 1 à 8, **caractérisée en ce que** le dispositif (4') de commande comporte un système magnétique ayant une armature (42) magnétique pouvant être commandée et agissant sur le piston (56) de vanne et le siège (58) pilote ou est constitué d'un préréglage (74) mécanique ou d'une combinaison d'un système magnétique ayant un préréglage mécanique.

10. Vanne suivant l'une des revendications 1 à 9 **caractérisée en ce qu'**elle a un quatrième raccord (4) fluidique supplémentaire, qui sert à l'évacuation sans pression de l'huile pilote.
